# EUROPEAN PATENT APPLICATION

(11) **EP 4 382 277 A1**
(43) Date of publication of application: **12.06.2024**
(21) Application number: 22461638.3
(22) Date of filing: 05.12.2022
(51) Int. Cl.: B29C 48/40, B41M 5/26, C08K 3/22, C08K 3/34, C08K 7/14

(54) **POLYAMIDE COMPOSITION, METHOD FOR MANUFACTURING COMPOSITE POLYAMIDE MATERIAL AND METHOD FOR LASER MARKING OF COMPOSITE POLYAMIDE MATERIAL**

(71) Applicant: Splast Spolka z ograniczona odpowiedzialnoscia, 38-400 Krosno (PL)
(72) Inventor: Stacel, Monika, 38-500 Bykowce (PL)
(74) Representative: Hudy, Ludwik

(57) **Abstract**

A polyamide composition for a laser-markable material containing polyamides, colorants, anti-ageing agents, lubricants and additives, which are nucleating agents in an amount of from 0.2% to 0.3% by weight in the polyamide composition, wherein another additive is a marking additive in the amount in a polyamide composition of from 0.9% to 1.1% by weight and containing Fe₃O₄ from 65.0% to 75.0% by weight and mica from 25.0% to 35, 0% by weight. A content of polyamides in the polyamide composition is not less than 64.5% by weight, and the content of masterbatches in the polyamide composition is from 2.0% to 3.0% by weight, and the content of anti-aging agents in the polyamide composition is from 0.5% to 1.0% by weight and the lubricant content in the polyamide composition is from 0.5% to 1.0% by weight.

## Description

The present invention relates to waste and scrap of polyamide material compositions with and without the addition of glass fiber with the addition of masterbatches.

The present invention also relates to the laser printing on objects made of thermoplastics dyed, for example black, thanks to which the quality and visibility of the prints will be improved. In particular, the present invention relates to the laser printing on products made of polyamide material PA6, PA66 and these materials with 30% glass fiber added, called PA6+30%GF and PA66+30%GF.

Currently, most plastics cannot be marked with the laser method or the marking results are of poor quality due to the reduced ability to absorb laser light. Coloring additives with/containing carbon black have a negative effect on the marking process due to its degradation by a laser beam. Laser marking replaces a tamp printing, which is problematic due to the use of ink containing volatile components depending on the temperature and humidity of the environment. In the case of laser marking, it is a permanent print, while in the case of tamp printing, paint is often chipped from its surface due to changing environmental conditions.

From publication CN107141783A, a method of modifying the PA6 material is known in order to increase susceptibility to laser radiation in order to improve the quality of laser marking of this material. This effect was obtained by adding nano TiO2 in the amount of 8% to 25% and ethylene vinyl acetate (EVA) resin in the amount of 10% to 15%. The modified material had high laser marking ability, high contrast ratio and clarity after marking, and improved mechanical properties.

From publication CN107459817A, a method of modifying PA66 and PA6 polyamide material and a method of their production are known. The description of the invention discloses that Ti-Pure R-103 was added to the mixture, which is a mixture of carbon black, KT101 pearl powder and titanium in the amount from 1% to 3%. The modified material was characterized by improved mechanical properties, and overprints resulting from the marking met the requirements for automatic detection and image processing equipment.

From publication CN114854192A, a high polymer material MCA reinforced with a fire-resistant PA6 material and a method for its production are known. The description of the invention discloses that Merck 8825 or Merck 8208, which are granules sensitive to the laser beam, was added to the mixture in an amount from 0% to 0.5%. The disclosed material had good mechanical properties and the imprints resulting from the marking were legible.

Although the marks made with a laser beam on the materials disclosed above were readable, they did not stand out white against the background of the material on which the marks were made.

The task of the present invention is to propose a material that will allow for non-contact and cheap marking of elements made of polyamide and polypropylene, without the need to treat the marked surface or use paint, and the marking made will be impossible to change after it has been changed.

The object is achieved according to the invention by using a polyamide composition having the features of claim 1 and made from polyamide waste and scrap, which contributes to the protection of the environment by/thanks to recycling.

A polyamide composition for a laser-markable material containing polyamides, masterbatches, anti-ageing agents, lubricants and additives, characterized in that one of the additives is nucleating agents in an amount from 0.2% to 0.3% in the polyamide composition by weight, and another is a marking additive in an amount in a polyamide composition from 0.9% to 1.1% by weight and containing Fe₃O₄ from 65.0% to 75.0% by weight and mica from 25.0% to 35, 0% by weight, wherein the content of polyamides in the polyamide composition is not less than 64.5% by weight, and the content of masterbatches in the polyamide composition is from 2.0% to 3.0% by weight, and the content of anti-aging substances in the polyamide composition is from 0.5% to 1.0% by weight and the lubricant content of the polyamide composition is from 0.5% to 1.0% by weight.

Preferably, the polyamides is regranulate made from waste and scrap of polyamide material.

A preferred development of the invention provides that the polyamide content of the polyamide composition is from 94.5% to 96.0% by weight.

Preferably, yet another additive is glass fibers in an amount from 29.0% to 31.0% by weight in the polyamide composition, wherein the content of polyamides in the polyamide composition is from 64.5% to 66.0% by weight.

On the other hand, a method for producing a composite polyamide material made of polyamide mixture in a co-rotating twin-screw extruder with a barrel and screws, according to which crushed and milled components to be included in the polyamide composition, including the laser marking additive, are supplied to a hopper in which the components, including the laser marking additive, to be included in the polyamide composition, are weighed and poured into the extruder hopper, and the weighed ingredients, including the laser marking additive, are plasticized in an extruder barrel, and the homogenized and extruded in the form of laser marking products, according to the invention, the temperature of the heating zones in the cylinder containing the components to be included in the polyamide composition is from 260°C and 290°C, a rotational speed of the screw in the extruder ranges from 300 rpm to 450 rpm, an extrusion capacity is from 80 kg/ h to 90 kg/h, and a degassing pressure ranges from 0.6 bar to 0.7 bar.

According to one variant of the embodiment of the invention, a further improvement is achieved by the fact that the components to be included in the polyamide composition are regranulate produced in an extruder from polyamide plastic waste containing, beside polyamides, masterbatches, anti-aging substances, lubricant agents and additives, including nucleating agents and a marking additive, and optionally glass fibers.

In addition, the method of laser marking a composite polyamide material formed into a product, wherein the product to be marked is positioned in the working field of a laser marking device and a laser beam is directed at the product and marks are produced by moving the laser beam, characterized by that the laser beam has a frequency of from 20 kHz and 30 kHz, a laser beam speed is from 1000 mm/s to 2200 mm/s and a pulse duration is from 4 ns and 200 ns, wherein the laser marking device is set up from 19% to 22% of its power, which is from 20W to 40W.

Other characteristics features and advantages of the invention will apparent from the description hereinafter with reference to the attached schematic drawings, schematic drawings, which are provided only by way of non-limitative examples of the invention, wherein:
Fig. 1 is a circular diagram of the percentage by weight of components of one embodiment of a polyamide composition,
Fig. 2 is a circular diagram of the percentage by weight of the components of another embodiment of the polyamide composition,
Fig. 3 is a circular diagram of the percentage by weight of the components of one embodiment of the marking additive,
Fig. 4 schematically shows an embodiment of a device for extruding a semi-finished product in a form of regranulate,
Fig. 5 schematically shows an embodiment of a device for producing a final product,
Fig. 6 schematically shows an embodiment of a laser marking device,
Fig. 7 shows a block diagram of a process of extruding a semi-finished product in a form of granules,
Fig. 8 shows a block diagram of a process for making a marking product,
Fig. 9 shows embodiments of products with different contents of glass fiber and marking additive, on which inscriptions were made by means of a laser device.

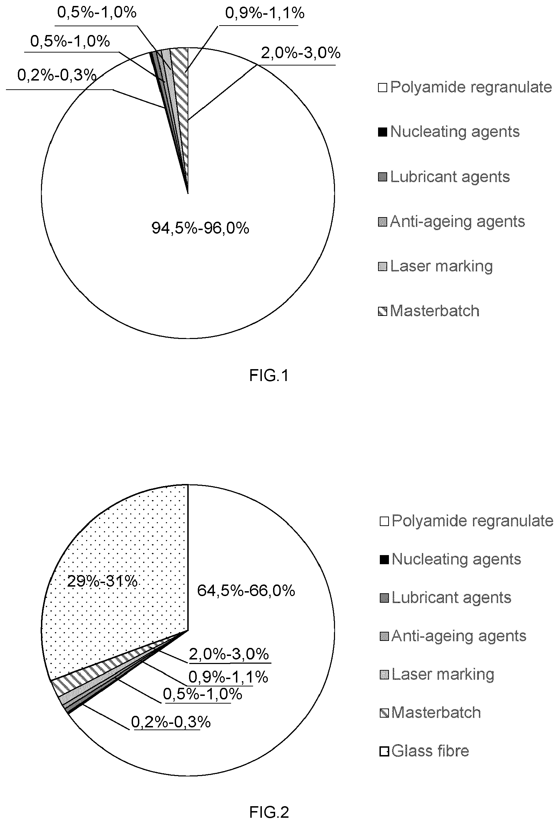

A polyamide as seen in Fig. 1 is the main ingredient of polyamide composition concerning to the invention and in one embodiment the polyamide composition comprises 94,5% by weight of polyamide which is a heterochain polymer containing main chain with repeated amide groups -CONH with a chemical formula -[-NH-(CH₂)₅-CO-]ₙ- ...formed as a result of the ring- opening polymerization reaction (ROP) of lactams, namely ε-caprolactam and appearing under the name polyamide PA6, and in another embodiment 96,0% by weight of polyamide PA6, preferably 95,8% by weight of polyamide PA6. The polyamide composition in one embodiment include nucleating ingredient, for example talc, and in another hydrated magnesium silicate with chemical formula Mg₃Si₄O₁₀(OH)₂, in an amount of 0,2% by weight in the polyamide composition in one embodiment, and in another embodiment 0,3 % by weight, preferably 0,24% by weight. The polyamide composition also contains masterbatches ingredient, for example in one of the embodiment a mixture of pigment concentrates, for example carbon black, in another embodiment a masterbatch and a liquid pigment, which is for example a polypropylene carrier with a chemical formula [-CH₂-CH₂-] with a carbon black pigment content of 25% by weight in the coloring substance, the proportion of which in the polyamide composition is 2,0% by weight in one embodiment, in another embodiment 3,0 % by weight, preferably 2,6% by weight. The prior art anti-aging agents, which are also included in the polyamide composition, in one are phenols, and in another embodiment are amines, and in yet another embodiment is polymer 2,2,4,4 tetrametylo-7-oksa-3,20-diazadispiro-5(5.1.11.2), henejcosan-21-one and epichlorohydrin, which proportion in the polyamide composition is 0,5% by weight in one embodiment and 1,0% by weight in another embodiment, preferably 0,53% by weight. Furthermore, the polyamide composition comprises prior art, which proportion in the polyamide composition is 0,5% by weight in one embodiment and 1,0% by weight in another embodiment, preferably 0,57% by weight. Lubricant agent in one embodiment is chemical compound of the formula 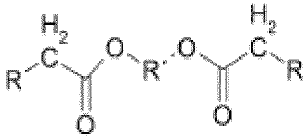 where R=C20-C30.

On the other hand the polyamide composition shown in Fig. 2 in a circular diagram of percentage by weight of components contains 64,5% by weight of polyamide which is a heterochain polymer containing the main chain with repeated amide groups -CONH a chemical formula -[-NH-(CH₂)₅-CO-]ₙ- and named polyamide PA6, in another containing 66,0% by weight of polyamide PA6, preferably 65,8% by weight of polyamide PA6. Another composite ingredient of this composition are glass fibres, for example with a diameter from 10 µm to 13 µm and a length from 4 mm to 6 mm, in the polyamide composite in an amount of 29,0% by weight in one embodiment, another one is 31,0%. The other ingredients are the same as in the example in Fig.1.

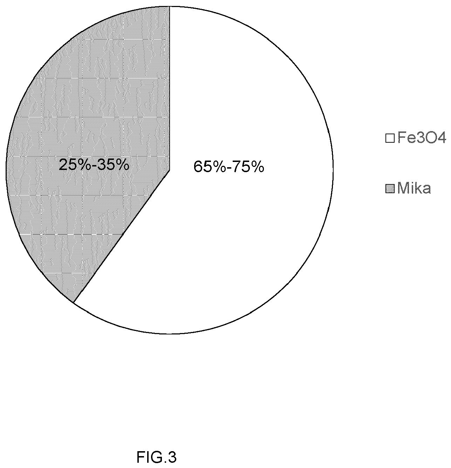

A marking additive in the polyamide composition in an amount of 0,9% by weight in one embodiment, and 1,1% by weight, preferably 1,0% by weight in polyamide composition, is mixture containing of Fe₃O₄ in one example in amount 65,0% by weight in one embodiment, and in another is 75,0% by weight, preferably is 70,0% by weight, and mica in an amount of 35,0% by weight in one embodiment 25,0%, as shown in Fig.3., preferably 30,0% by weight.

In another embodiments, instead of the polyamide known as the polyamide PA6, the main ingredient of the polyamide composition concerning to the invention is polyamide known as polyamide PA66, which is a heterochain polymer containing the main chain with repeated amide groups -CONH, which are formed as a result of polycondensation of diamines with dicarboxylic acids or dicarboxylic acid chlorides.

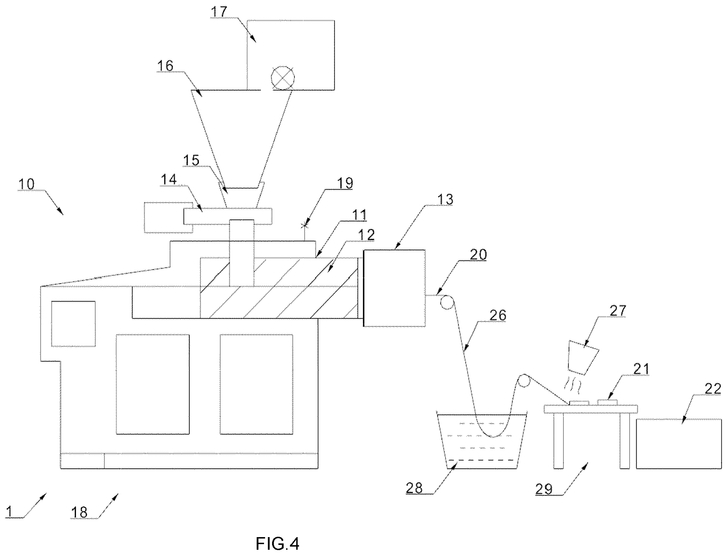

Fig. 4 submit shows an embodiment of a device 1 for extruding regranulate material in a form of granules 21, the main component of which is a co-rotating twin screw extruder 10 with a degassing valve 19 placed on a base 18 with a drive and control system, hereinafter refer to as an extruder, which is known from the state of the art and mainly comprises a cylinder 11 and a screw 12 and a head 13, which are subassemblies of the co-rotating twin screw extruder 10. The device for extruding the semi-finished product in the form of regranulate, example the device of company Engel Polska Sp. z o.o., Poland, shown in Fig.4., contains a crusher 17, used for crushing of lumps and production waste, with a mill and its dedusting, a gravimetric mixer 16, where the ingredients are mixed, and dispensers 14,15, in which ingredients are weighed, including the component with a marking additive, which are filling directly through a hopper into the plasticizing system, in which they are heated and plasticized with their simultaneous mixing. This means, that during polyamide regranulate, production process, weighed ingredients, primarily a starting polyamide material, plasticizes in the extruder barrel, homogenized with the rest ingredients for plastic material and extruded through a mouthpiece die 13 in the head 13 in a form of a thread 20, which is moved by conveyors system 26. The thread 20 product is cooled, for example in a tub 28 with water, and then dried with a dryer 27, then cut by a cutting device 29 into granulates 21, which are placed in containers 22.

The main parameters of extrusion in the extruder for various types of material are given in Table 1 below. And so the temperature for heating zones in the barrel, containing ingredients to be included in the polyamide composition, in one embodiment is 260 °C, in another embodiment is 290 °C, preferably 280 °C, screw rotational speed in extruder in one embodiment is 300 rpm, and in another embodiment is 450 rpm, preferably 400 rpm, efficiency of extrusion in one embodiment is 80 kg/h, and in another embodiment is 90 kg/h.

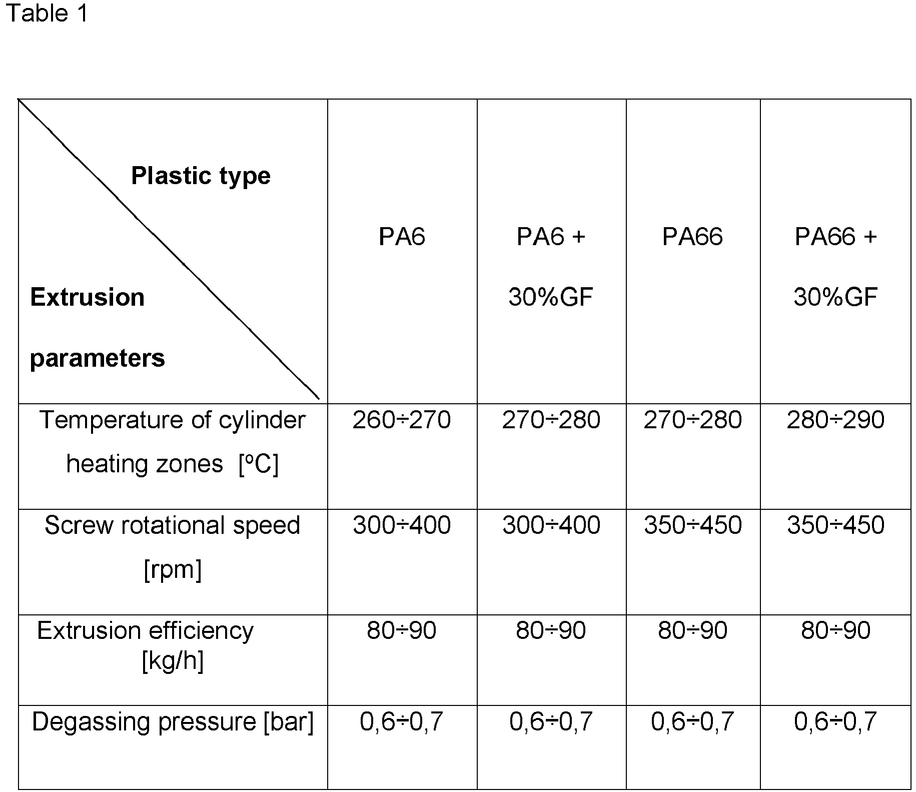

Another parameter is the degassing pressure, which in one embodiment is 0,6 bar, and in another embodiment is 0,7 bar, preferably 0,65 bar.

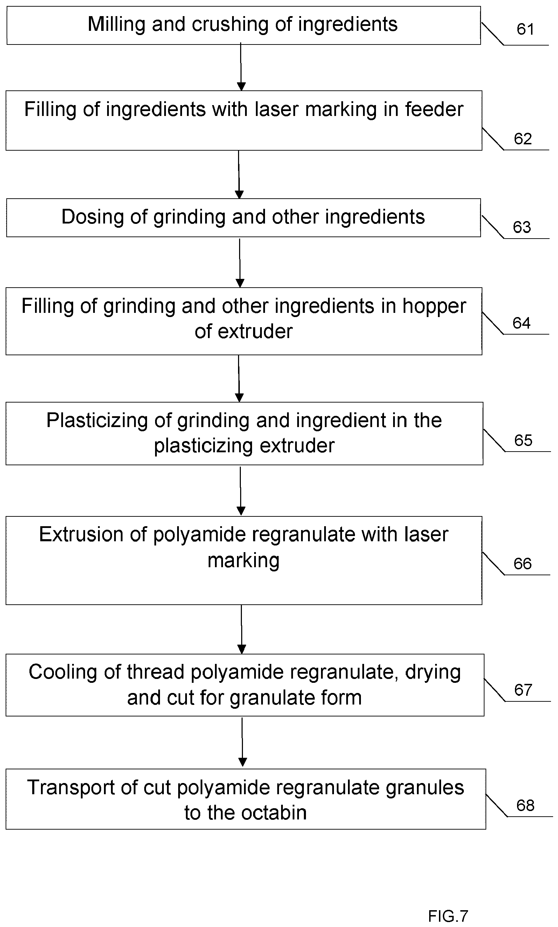

Individual steps of the extrusion process is the semi-product in the form of regranulate are shown in Fig. 7 using a block diagram. The extrusion process contain in plasticizing the material in the form of granulate in one embodiment, a polyamide regrind in another, another embodiment and the polyamide granulate and the polyamide regrind in yet embodiment in the plasticizing system of the extruder, and then shaping it in the form of threads that pass through the extruder head, they are cooled, dried and cut into the granulates.

According to the above-mentioned block diagram crushing and milling of waste and scrap of polyamide material follows in step 61 and filling into the dispensers in step 62 and dozing in step 63, and the crushed and milled regrind or mixed regrind and/or pellets is filling in step 64 to the extruder hopper or dispenser, where by gravity, where it is transported by gravity, in one embodiment by means of screw feeders, to the extruder barrel. In the feeder zone or transport solid material the regrind and ingredients are taken from the hopper, where they are pre-compacted and further compacted and transported in the cylinder as result of continuous concurrent rotation of the screw towards the head. In the heated zone of the cylinder they are melted, followed by material and thermal homogenization. In sequence, in the plasticizing or melting or transformation zone, the polyamide material or regrind goes from solid to plasticized in step 65. The melting of the material occurs under the influence of heat generated by the heating elements and friction during grinding against the cylinder and screw, as well as an internal friction. Such plasticized material leaving the melting zone is degassed and extruded in the form of threads by head in step 66 through the head with the number of meshes adapted to the efficiency of the extrusion process. The next threads are then cooled in step 67, for example in bath with water, successively dried and cut into the granulates form in step 68.

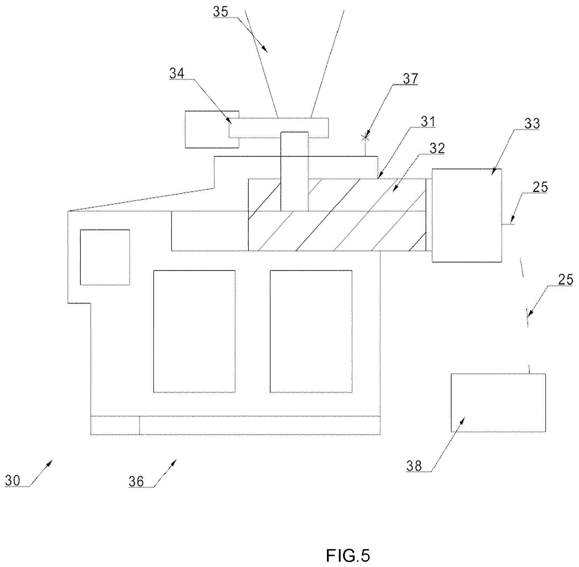

Finished or final products made from regranulate containing the components of the polyamide composite according to the invention are produced in an injection molding machine 30 located on a base 36 shown schematically in Fig. 5, whose main ingredients are the plasticizing system contain a screw 32 and a cylinder 31 and a piston, a form 33, a closing system usually made of two centric servomotor that keep the form 33 closed when the pressure in it increases, a hydraulic or electric drive system, that sets the screw in rotation and reciprocating motion in the form 33 with a degassing valve 37 the finished or final product 25 is formed and placed in container 38. The injection molding machine 30 is further equipped with a feeder 35 and a hopper 34, which ingredient are weighed, and which are poured into the hopper.

An injection process contains in plasticizing the regranulate, for example polyamide an additive improving marking, in plasticizing system of the injection molding machine at the plasticizing temperature appropriate for the given type of material, then injecting it into the mold cavity and cooling it down to crystallize the regranulate. A melting of granulate/regranulate takes place in the barrel. The temperature inside it is maintained heating elements. In addition, the injection molding machines contain a hydraulic or mechanical ejector elements to separate the final product from the mold.

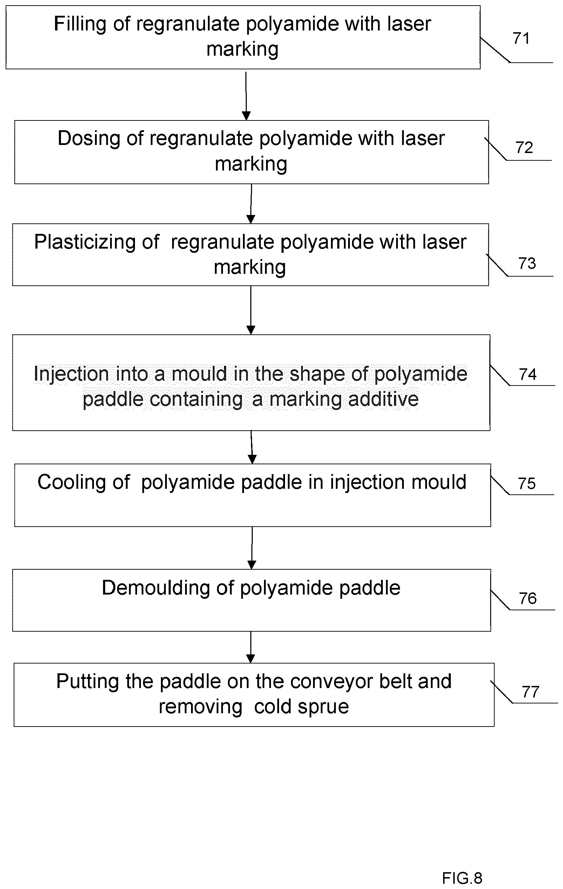

Fig. 8 shows a block diagram of a process for marking a marking product, example polyamide paddles. During the injection process product is produced, the weighed ingredients, in one embodiment, the polyamide material containing the marking additive, and in another embodiment the regranulate of the polyamide composition according to the invention and containing the marking additive are poured into the hopper in step 71, dosed in step 72 and plasticized in the injection moulding machine barrel in step 73., homogenized in step 74 and molded or formed in the molding machine is cooled, dried and final shaped is in step 76.

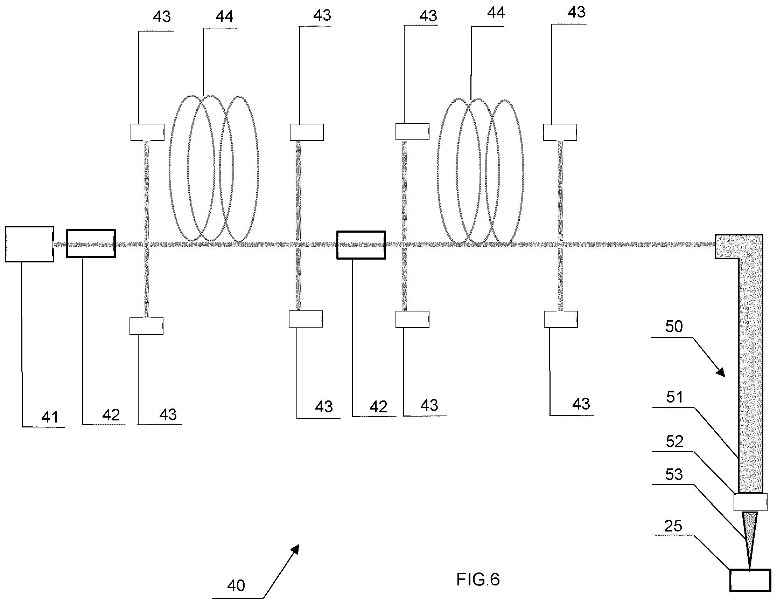

The final product is marked in step 77 by the laser device shown in Fig.6. Referring to Fig. 6, a low power pulsed laser beam, for example 40 mW, is produced is a pulse generator 41. The pulse generator 41 in one embodiment is contains an optical resonator that includes an opaque mirror, a semi-permeable mirror, and optionally a goodness modulator. This primary beam then passes trough an one-way optical isolator 42, which prevents the amplified beam from reentering it, which could damage the lower-power resonator. The primary beam then enters a preamplifier 44 and is amplified to a power of at least 1W. A preamplifier section is made of an "active" optical fiber 25 m long, in one embodiment powered by one or more diode lasers named pumping diodes 43. The 1W beam then pass throw another optical isolator 42 and enters the main amplifier 44. The amplifier section is also made of the "active" optical fibre 25 m long, in one embodiment, which increases the beam power to a maximum value. Also this section is powered by series of pumping diodes 43. The beam the passes through another optical isolator 42 to the output fibre 51 of the laser fiber optical device. The laser light is emitted through the output fiber into a large cone from which it is collected and collimated, i.e. converted into a parallel beam 53 by means of a focusing head 52, which directs the laser beam onto the product 25 to be marked. An output housing also contains a final device to protect light reflected from the marked product from entering the laser again.

The laser beam in one embodiment has a frequency of 20 kHz and in another embodiment 30 kHz, a speed of laser beam is 1000 mm/s in one embodiment and 2200 mm/s in another embodiment, and pulse duration is in one embodiment 4 ns and in another embodiment 200 ns, the laser marking device being set up in 19% in one embodiment and 22% in another embodiment, which is 20W in one embodiment and 40W in another embodiment.

Table 2 shows in a second column values of selected mechanical properties of products made of PA6 polyamide plastic without the masterbatch additive, in a third column PA6 with the addition of masterbatch additive in an amount of 1% by weight of the polyamide composition, in a fourth column PA6 with the addition of masterbatch additive in the amount of 3% by weight of the composition polyamide and in a fifth column PA66 with the addition of a masterbatch in the amount of 3% by weight of the polyamide composition.

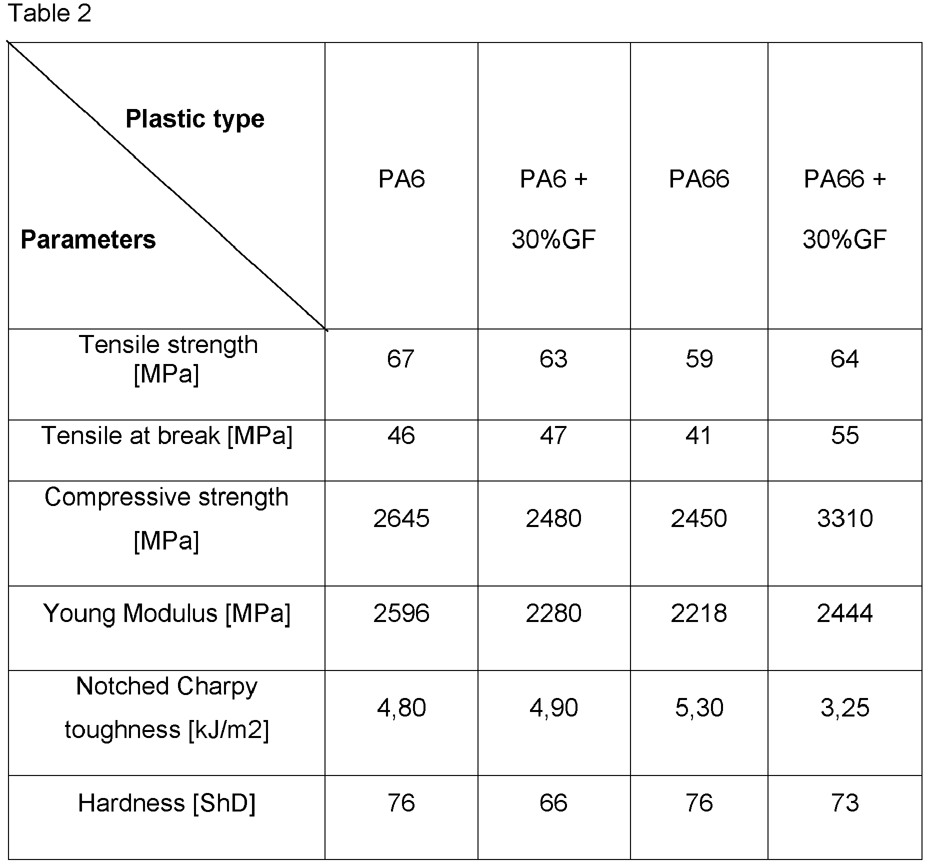

Table 3 shows in a second column values of selected mechanical properties of products made of polyamide PA6 with an addition of glass fiber in an amount of 30% by weight of the polyamide composition without masterbatch additive, in a third column PA6 with the addition of glass fiber in the amount of 30% by weight of the polyamide composition and with the addition of masterbatch additive in the amount of 1% by weight of polyamide composition, in fourth column PA6 with the addition of glass fiber in the amount of 30% by weight of the polyamide composition and with the addition of masterbatch additive in an amount of 3% by weight of the polyamide composition. In turn, table 4 shows in the second column the values of selected mechanical properties of products made of polyamide PA66 with the addition of glass fibre in the amount of 30% by weight of the polyamide composition without a masterbatch additive, in the third column PA66 with the addition of glass fibre in the amount of 30% by weight of polyamide composition and with the addition of the masterbatch additive in amount of 1% by weight of polyamide composition and with the addition of a masterbatch additive in an amount of 3% by weight of polyamide composition.

**Table 3**

| **Plastic type** | **PA6+** | **PA6+** | **PA6+** |
|---|---|---|---|
| **Parameters** | **30%GF** | **30%GF+1%** | **30%GF+3%** |
| Tensile strength [MPa] | 112 | 147 | 141 |
| Tensile at break [MPa] | 81 | 144 | 112 |
| Compressive strength [MPa] | 2792 | 2450 | 2530 |
| Young Modulus [MPa] | 2444 | 5201 | 5927 |
| Notched Charpy toughness [kJ/m2] | 9,00 | 12,00 | 14,00 |
| Hardness [ShD] | 80 | 68 | 69 |

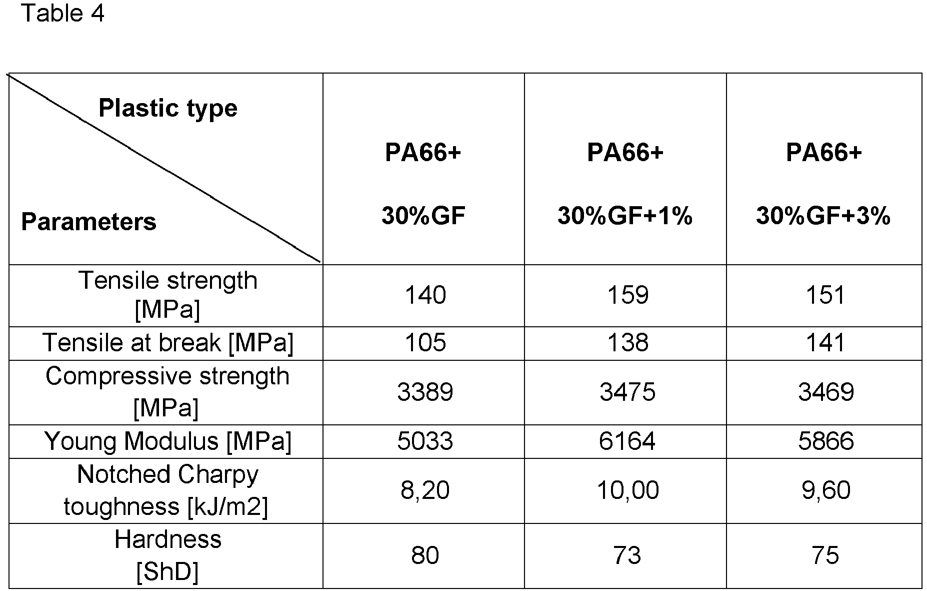

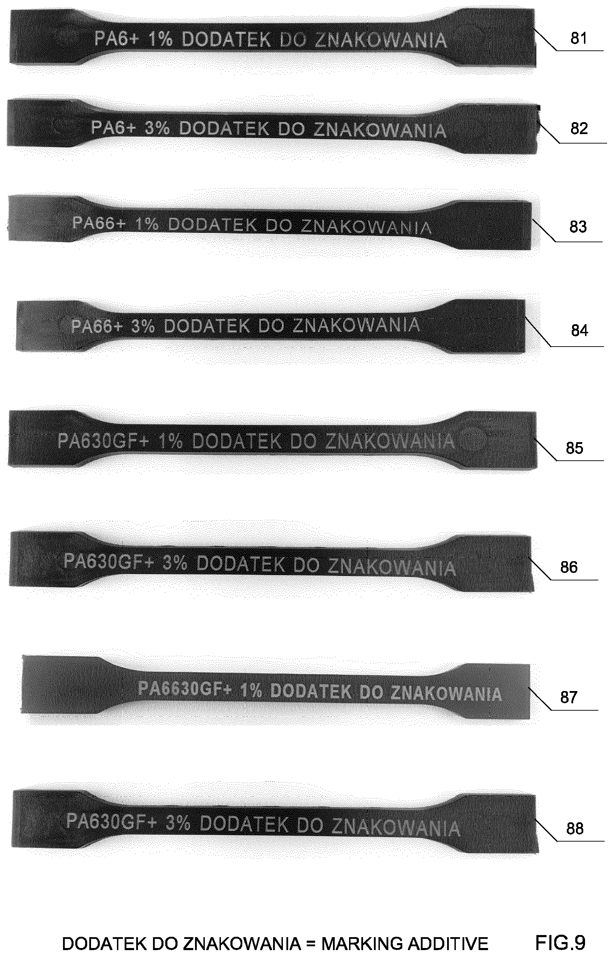

Fig. 9 shows the final products made of the composition according to the invention, for example in a shape of polyamide paddles 81, 82,85 and 86, on which overprints made according to the invention indicate that the paddles are made of PA6 polyamide material without the addition of glass fibre, and the percentage of the marking additive was 1% and 3% by weight of the polyamide composition, while the polyamide paddles 83, 84, 87 and 88 were made of polyamide PA66, and the percentage of the marking additive was 1% and 3% by weight of the polyamide composition, and the percentage of glass fiber was 30% by weight of the polyamide composition. The overprint is created due to fact that in one embodiment dispersed mica component coated with iron oxide- in a polymer mass is an inert additive that does not react with the polyamide material. During marking with a laser beam, the dispersed component of mica and iron oxide foams on the surface of the marked material, giving a white mark, named a pictogram. On each of the polyamide paddle from Fig. 9, the overprints are white against a background of the material, are clear and readable.

## Claims

1. A polyamide composition for a laser-markable material comprising polyamides, masterbatches, anti-ageing, agents, lubricants agents and additives, **characterized in that** one of the additives is nucleating agents in an amount of 0,2% to 0,3% by weight in the polyamide composition, and another is a laser marking additive in an amount of 0,9% to 1,1% by weight in the polyamide composition and containing Fe₃O₄ from 65,0% to 75,0% by weight and mica from 25,0% to 35,0% by weight, wherein content of polyamides in the polyamide composition is not less than 65% by weight, and content of masterbatch additive in the polyamide composition is from 2% to 3% by weight, and the content of anti-aging agents in the polyamide composition is from 0,5% to 1% by weight, and content of lubricants agents in the polyamide composition is from 0,5% to 1% by weight.

2. The polyamide composition according to claim 1, **characterized in that** the polyamides is regranulate made from waste and scrap of polyamide material.

3. The polyamide composition according to claim 1 or 2, **characterized in that** content of polyamides in the polyamide composition is from 94,5% to 96,0% by weight.

4. The polyamide composition according to claim 1 or 2, **characterized in that** yet another additive is glass fibers in amount of from 29,0% to 31,0% by weight in the polyamide composition wherein the content of polyamides in the polyamide composition is from 64,5% to 66,0% by weight.

5. A method for manufacturing a composite polyamide material made of a polyamide mixture in a co-rotating twin-screw extruder with barrel and screws according to any one of claims from 1 to 4, wherein crushed and milled components to be included in the polyamide composition, including laser marking additive, are weighed and poured into the hopper, and the weighed ingredients, including the laser marking additive, are plasticized in the extruder barrel, and then homogenized and extruded in the form of laser marking products, **characterized in that** temperature of heating zones of the cylinder, in which the components to be included in the polyamide composition are plasticized is from 260°C to 290°C, a rotational speed of the screws in extruder ranges from 300 rpm to 450 rpm, an extrusion capacity is from 80 kg/h to 90 kg/h, and a degassing pressure ranges from 0,6 to 0,7 bar.

6. The method for producing a composite polyamide material according to claim 5, **characterized in that** the components to be included in the polyamide composition are regranulates produced in the extruder from polyamide plastic waste.

7. A method for laser marking a composite polyamide material moulded into a product by the method according to one of claims from 5 to 6, wherein the product to be marked is positioned in a working field of a laser marking device and a laser beam is directed at the product to be marked and marks are produced by moving the laser beam, **characterized in that** the laser beam has a frequency of from 20 kHz to 30 kHz, a speed of the laser beam is from 1000 mm/s to 2200 mm/s, and a pulse duration is from 4 ns to 200 ns, wherein the laser marking device is set up from 19% to 22% of its power, which is from 20W to 40 W.
